# EUROPEAN PATENT APPLICATION

(11) **EP 3 680 843 A1**
(43) Date of publication of application: **15.07.2020**
(21) Application number: 19218600.5
(22) Date of filing: 20.12.2019
(51) Int. Cl.: G06Q 20/20, G06Q 10/00, A47F 9/04, G01G 19/414, G07G 1/00

(54) **READING APPARATUS AND A PROGRAM**

(30) Priority: 10.01.2019 JP 2019002907
(71) Applicant: Toshiba TEC Kabushiki Kaisha, Shinagawa-ku Tokyo 141-8562 (JP)
(72) Inventor: Suzuki, Shigeaki, Tokyo, 141-8562 (JP)
(74) Representative: Hoffmann Eitle

(57) **Abstract**

A commodity reading apparatus includes a display screen, a radio-frequency (RF) tag reader to read commodity codes from RF tag, a scale to obtain a first weight of commodities, and a processor. The processor is configured to: receive commodity codes from the RF tag reader, obtain commodity information corresponding to the commodity codes, and calculate a second weight based on the commodity information. The first weight is compared to the second weight. An error notification is generated when the difference between the first and second weights meets or exceeds a threshold value. An error notice is also displayed on the display screen. A notification is transmitted to an administrator terminal if the error notification has been generated and a predetermined transmission condition has been satisfied.

## Description

### CROSS-REFERENCE TO RELATED APPLICATION

This application is based upon and claims the benefit of priority from Japanese Patent Application No. 2019-002907, filed on January 10, 2019, the entire contents of which are incorporated herein by reference.

### FIELD

Embodiments relate to a reading apparatus.

### BACKGROUND

A POS (Point of Sale) terminal that performs commodity registration processing for sales transactions by reading item information stored in a radio frequency (RF) tag is known.

In a conventional technology related to detection RF tags placed on various items, an actual measured weight value of tagged items, as measured by a weighing device, is compared to expected weight values of the items that have been identified by reading information from the radio tags attached to those items. The radio tags may pre-store the expected weight values for corresponding items to which the radio tags are attached. A difference between the actual measured weight value and the expected weight value enables a determination to be made that at least one of the RF tags attached to at least one of the items to be registered has not yet been successfully read.

However, in this conventional technology, the POS terminal may fail to read an RF tag when RF tagged items are overlapping with each other or transmissions from the RF tags are affected by moisture or metal located nearby.

When an operator of the POS terminal is not familiar with an operation of the POS terminal, the operator may not know the why the POS has failed to read each RF tag. As a result, the operator cannot manipulate the POS terminal to read all the RF tags.

### SUMMARY OF THE INVENTION

One of the objects of the present invention is to improve prior art techniques and overcome at least some of the prior art problems as for instance above illustrated.

According to a first aspect of the invention, it is provided a point-of-sale apparatus, comprising a display screen for displaying information to a user; a radio-frequency (RF) tag reader configured to read commodity codes from RF tags attached to commodities; a weight scale to obtain a first weight of commodities on the weight scale; a processor configured to receive commodity codes from the RF tag reader; to obtain commodity information corresponding to the commodity codes; to calculate a second weight based on the commodity information; to compare the first weight to the second weight; to generate an error notification when a difference between the first and second weights meets or exceeds a predetermined threshold value; to display an error notice on the display screen if the error notification is generated; and to transmit a notification to an administrator terminal if the error notification has been generated and a predetermined transmission condition has been satisfied.

Optionally, the point-of-sale apparatus according to the first aspect of the invention further comprises a communication interface, wherein the notification to the administrator terminal is transmitted by the communication interface.

Optionally, in the point-of-sale apparatus according to the first aspect of the invention, the weight scale is configured to apply a tare weight value in obtaining the first weight.

Optionally, the point-of-sale apparatus according to the first aspect of the invention further comprises a storage unit storing commodity information in association with commodity codes, wherein the commodity information includes an expected weight value for each commodity code.

Optionally, the point-of-sale apparatus according to the first aspect of the invention further comprises a storage unit storing commodity information in association with commodity codes, wherein the commodity information for each commodity code includes a flag value indicating whether the commodity corresponding to the commodity code hinders the reading of commodity codes from RF tags.

Optionally, in the point-of-sale apparatus according to the first aspect of the invention, the predetermined transmission condition is an elapse of time since the display of the error notice on the display screen exceeding a preset value.

Optionally, in the point-of-sale apparatus according to the first aspect of the invention, the predetermined transmission condition is the number of times during a single sales transaction that the error notification has been generated exceeding a preset value.

Optionally, the point-of-sale apparatus according to the first aspect of the invention further comprises a user input device, wherein the predetermined transmission condition is receipt of a user input at the user input device requesting administrator assistance.

Optionally, in the point-of-sale apparatus according to the first aspect of the invention, the processor is configured to complete commodity registration processing for a sales transaction only when the difference between the first weight and the second weight is less than the predetermined threshold value.

According to a second aspect of the invention, it is provided a non-volatile computer readable storage medium including program instructions which when executed by a processor of a point-of-sale apparatus, the point-of-sale apparatus carries out a method of commodity registration, said method comprising receiving commodity codes from a RF tag reader; obtaining commodity information corresponding to the commodity codes; obtaining a first weight of commodities placed on a weight scale; calculating a second weight based on the commodity information; comparing the first weight to the second weight; generating an error notification when a difference between the first and second weights meets or exceeds a predetermined threshold value; displaying an error notice on a display screen of the point-of-sale apparatus if the error notification is generated; and transmitting a notification to an administrator terminal if the error notification has been generated and a predetermined transmission condition has been satisfied.

Optionally, in the non-volatile computer readable storage medium according to the second aspect of the invention, the predetermined transmission condition is an elapse of time since the display of the error notice on the display screen exceeding a preset value.

Optionally, in the non-volatile computer readable storage medium according to the second aspect of the invention, the predetermined transmission condition is the number of times during a single sales transaction that the error notification has been generated exceeding a preset value.

Optionally, in the non-volatile computer readable storage medium according to the second aspect of the invention, the predetermined transmission condition is receipt of a user input at a user input device of the point-of-sale apparatus, the user input requesting administrator assistance.

Optionally, in the non-volatile computer readable storage medium according to the second aspect of the invention, the commodity information includes an expected weight value for each commodity code.

Optionally, in the non-volatile computer readable storage medium according to the second aspect of the invention, the commodity information for each commodity code includes a flag value indicating whether the commodity corresponding to the commodity code hinders the reading of commodity codes from RF tags.

According to a third aspect of the invention, it is provided a point-of-sale terminal controller, comprising a processor configured to receive commodity codes from an RF tag reader via a first interface connection; to obtain a first weight of commodities from a weight scale via second interface connection; to obtain commodity information corresponding to the commodity codes from a commodity data table; to calculate a second weight based on the commodity information; to compare the first weight to the second weight; to generate an error notification when a difference between the first and second weights meets or exceeds a predetermined threshold value; to display an error notice on a display screen of a point-of-sale terminal if the error notification is generated; and to transmit a notification to an administrator terminal via a communications interface if the error notification has been generated and a predetermined transmission condition has been satisfied.

Optionally, in the point-of-sale terminal controller according to the third aspect of the invention, the predetermined transmission condition is an elapse of time since the display of the error notice on the display screen exceeding a preset value.

Optionally, in the point-of-sale terminal controller according to the third aspect of the invention, the predetermined transmission condition is the number of times during a single sales transaction that the error notification has been generated exceeding a preset value.

Optionally, in the point-of-sale terminal controller according to the third aspect of the invention, the predetermined transmission condition is receipt of a user input at a user input device of the point-of-sale apparatus, the user input requesting administrator assistance.

Optionally, in the point-of-sale terminal controller according to the third aspect of the invention, the commodity information includes an expected weight value for each commodity code.

Optionally, in the point-of-sale terminal controller according to the third aspect of the invention, the commodity information for each commodity code includes a flag value indicating whether the commodity corresponding to the commodity code hinders the reading of commodity codes from RF tags.

### BRIEF DESCRIPTION OF THE DRAWINGS

FIG. 1 is an explanatory diagram illustrating an example of a POS system according to an embodiment.
FIG. 2 is an explanatory diagram illustrating an example of a schematic configuration of a POS terminal.
FIG. 3 is a block diagram showing an example of the hardware configuration of a POS terminal.
FIG. 4 is an explanatory diagram illustrating an example of a data structure of a commodity master data.
FIG. 5 is a block diagram showing an example of a functional configuration of the POS terminal.
FIG. 6 is a flowchart showing an example of sales data registration processing executed by the POS terminal.

### DETAILED DESCRIPTION

In general, according to one embodiment, commodity reading apparatus, also referred to as a commodity registering apparatus, comprise: a display screen for displaying information to a user; a radio-frequency (RF) tag reader configured to read commodity codes from RF tags attached to commodities; weight scale to obtain a first weight of commodities on the weight scale; and a processor. The processor is configured to: receive commodity codes from the RF tag reader; obtain commodity information corresponding to the commodity codes; calculate a second weight based on the commodity information; compare the first weight to the second weight; generate an error notification when a difference between the first and second weights meets or exceeds a predetermined threshold value; display an error notice on the display screen if the error notification has been generated; and transmit a notification to an administrator terminal if the error notification has been generated and a predetermined transmission condition has been satisfied..

An example embodiment of a reading apparatus and a program will be described with reference to the accompanying drawings. The example embodiments described below do not limit the present disclosure. A reading apparatus and a program according to one example is a POS (Point Of Sale) terminal installed in a retail store.

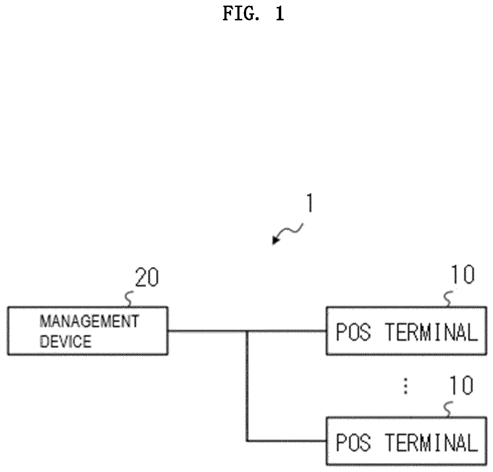

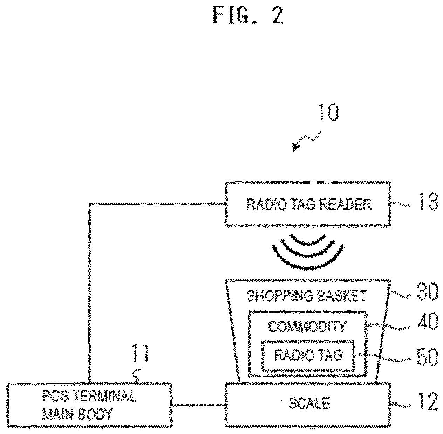

FIG. 1 is an explanatory diagram for explaining an example of a POS system 1 according to an embodiment. As shown in FIG. 2, the POS system 1 is a self-service-type POS system that executes commodity registration processing for registering a commodity 40 or other items being sold in the store as well as the checkout/settlement processing for the sales transaction, in accordance with the customer's operation. Note that the POS system 1 is not limited to the self-service-type system. The POS system 1 may be a POS system which is normally operated by a store clerk. In other examples, the POS system 1 may be a semi-self-service-type system in which the customer handles commodity registration processing and a store clerk handles checkout/settlement processing.

The POS system 1 includes at least one POS terminal 10 and a management device 20. The POS terminal(s) 10 and the management device 20 are connected to each other via a network to enable them to communicate with each other. The POS terminal 10 is a sales data processing apparatus for executing commodity registration processing for registering the commodity 40 to be sold and checkout processing for the commodity 40 registered by the commodity registration process.

The management device 20 may be an information processing apparatus, such as a personal computer, a tablet terminal, a smartphone, or the like. The management device 20 is a terminal operated by an administrator who manages the POS system 1, and may also be referred to herein as an administrator terminal. For example, in the case of the self-service-type system, an attendant terminal that is used to give customers helpful information about operation of the POS system 1 can function as the management device 20. In the normal POS system, a terminal device used by a store manager can function as the management device 20. Note that although the POS system 1 shown in FIG. 1 depicts two POS terminals 10 and one management device 20, the number of each apparatus type is arbitrary and may different than what is shown in FIG. 1.

FIG. 2 is an explanatory diagram for explaining an example of a schematic configuration of the POS terminal 10. The POS terminal 10 includes a POS terminal main body 11, a weight scale 12, and an RF tag reader 13. The weight scale 12 and the RF tag reader 13 are connected to the POS terminal main body 11.

Commodity registration processing for registering a commodity 40 to be sold and checkout processing for the commodity 40 registered by the commodity registration processing is executed in the POS terminal main body 11. The POS terminal main body 11 controls the weight scale 12 and the rf tag reader 13.

The weight scale 12 is a device for weighing an article that has been placed at a weighing position. For example, the weight scale 12 weighs a shopping basket 30 placed at the weighing position. The shopping basket 30 may contain one or more commodities 40, which have been selected for purchase by a customer as the customer shops within a store. That is, the weight scale 12 determines the weight of all the commodities 40 contained in the shopping basket 30. Alternatively, a commodity 40 can be placed at the weighing position, the weight scale 12 measures the weight of the commodity 40 by itself.

A RF tag 50 is attached to each commodity 40. The RF tag 50 in this example is an RFID tag or the like. The RF 50 includes an IC (Integrated Circuit) chip for storing information and an antenna. The RF tag 50 operates to readout the information stored in the IC chip and to write information by communicating with the RF tag reader 13. When reading out information already stored in the IC chip, the RF tag 50 transmits the stored information to the RF tag reader 13. For example, commodity information relating to a particular commodity 40 is stored in an RF tag 50, which is attached to the particular commodity 40. The commodity information includes, for example, a commodity code for identifying the particular commodity 40.

The RF tag reader 13 reads a commodity code stored in any RF tag 50 within a reading area of the RF tag reader using wireless signal from the RF tag 50. In this example, since the RF tag reader 13 reads the RF tag 50 attached to a commodity 40 that has been placed at the weighing position of the weight scale 12, the weighing position can also be considered as a reading position.

The RF tag reader 13 shown in FIG. 1 is shown positioned above the weight scale 12, and emits radio waves towards the weight scale 12. However, the RF tag reader 13 may emit radio waves toward the weight scale 12 from any direction, and placement of the RF tag reader 13 is not limited to that depicted in FIG. 1. That is, the RF tag reader 13 may emit radio waves from below the scale 12 or from the either side of the weight scale 12. Furthermore, the RF tag reader 13 may emit radio waves from a plurality of directions (e.g., omnidirectionally). Further, the weight scale 12 and the RF tag reader 13 may be integrated parts of the POS terminal 10.

Next, the hardware configuration of the POS terminal 10 will be described.

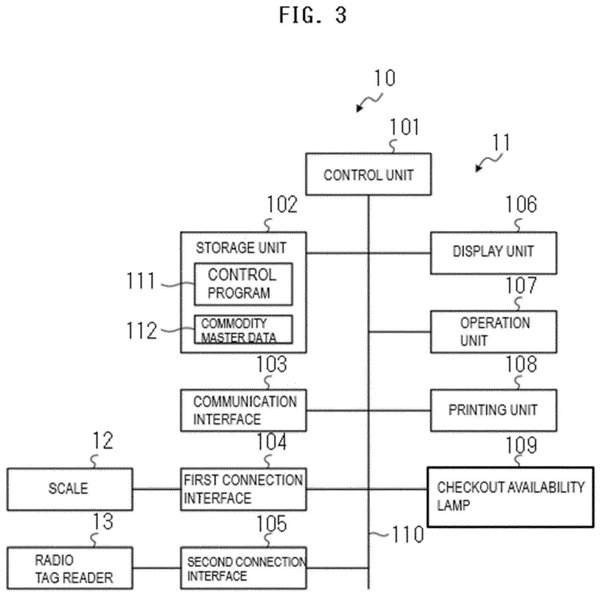

FIG. 3 is a block diagram showing an example of the hardware configuration of the POS terminal 10. The POS terminal 10 includes a control unit 101 (also referred to as POS controller), a storage unit 102, a communication interface 103, a first connection interface 104, a second connection interface 105, a display unit 106, an operation unit 107, a printing unit 108, and a checkout availability lamp 109. These components are connected to each other via a system bus 110 such as a data bus or an address bus.

The control unit 101 is a computer that controls the overall operation of the POS terminal 10 and performs the various functions of the POS terminal 10. The control unit 101 includes a CPU (Central Processing Unit), a ROM (Read Only Memory), and a RAM (Random Access Memory).

The CPU controls the operation of the POS terminal 10 in a centralized manner. The ROM is a nonvolatile memory that stores various data even when power is not supplied thereto. The RAM is a memory that typically corresponds to a computing workspace of the CPU. Data is read out from or written to a designated area of the RAM. Then, the CPU executes a program stored in the ROM or the storage unit 102.

The storage unit 102 is a storage device such as a hard disk drive (HDD) or a solid state drive (SSD). The storage unit 102 in this example stores the control program 111 and the commodity master data 112. The commodity master data 112 may also or instead be stored in another device such as a store server and possible storage locations are not limited to the storage unit 102.

The control program 111 can be a software program for executing various functions provided by an operating system and the POS terminal 10. The control program 111 includes program instructions for performing described functions according to the present embodiment.

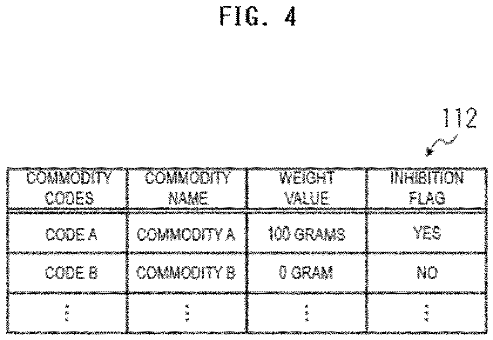

FIG. 4 is an explanatory diagram for explaining an example of the data structure of the commodity master data 112. The commodity master data 112 includes various information related to commodities 40. The commodity master data 112 includes a commodity name, a weight value, and an inhibition flag for each commodity code. The commodity code is identification information capable of identifying each particular commodity 40. The commodity name is the name of the commodity 40. The weight value is a value indicating the weight of the commodity 40. Here, in this example, the weight of each fresh food item, such as vegetables and fish, is considered to vary depending on each particular instance of the fresh food item (commodity 40). Therefore, it is difficult to set the weight value of such items in the commodity master data 112. As such, the weight value is set to 0 grams in commodity master data 112 when setting the weight value of a commodity type is difficult to know beforehand. The present disclosure is not limited to a method of making the weight value 0 grams in the commodity master data 112 for such items, and in some instances a flag (or other designator) may be used to indicate a commodity for which a weight is difficult to known beforehand. The inhibition flag (Yes/No) is information indicating whether the particular commodity 40 is considered to be a type that may inhibit the reading of the RF tags 50. When there is metal or water/moisture associated with the commodity 40 type, the reading of the RF tag 50 by the RF tag reader 13 may be inhibited. The inhibition flag indicates there is a possibility the reading of an RF tag 50 might be inhibited by the presence of the commodity 40. The commodity master data 112 is not limited to these types of information and may also store other types of information.

The communication interface 103 permits communication with the apparatus connected via the network. The communication interface 103 communicates with the management device 20, for example.

The first connection interface 104 is an interface for connecting a peripheral device. The first connection interface 104 may be a USB (Universal Serial Bus) or the like. The first connection interface 104 is connected to the weight scale 12.

The second connection interface 105 is an interface for connecting a peripheral device. The second connection interface 105 may be a USB or the like. The second connection interface 105 is connected to the RF tag reader 13.

The display unit 106 is a touch panel display with a touch panel stacked on a display surface. The operation unit 107 is an input device such as a keyboard for operating the POS terminal 10.

The printing unit 108 is a printer that prints out a receipt on which various information related to a sales transaction can be printed.

The checkout availability lamp 109 is an LED (Light Emitting Diode), in this example, that indicates whether or not the checkout processing can be presently be performed at the POS terminal 10. For example, when the checkout processing is available (e.g., presently unused by another customer), the checkout availability lamp 109 flashes blue. On the other hand, the checkout availability lamp 109 flashes red when the checkout processing is not available (e.g., in use by another customer).

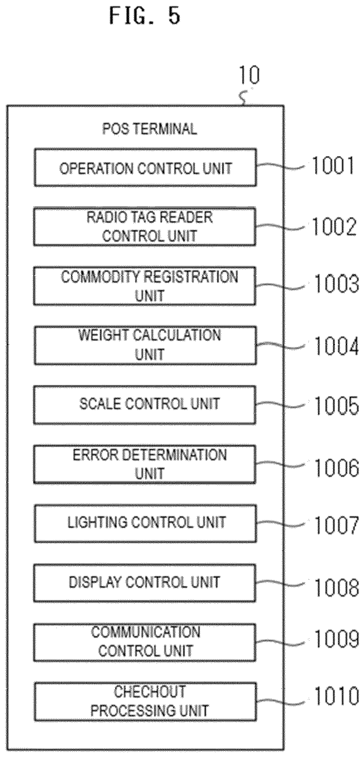

Next, functions of the POS terminal 10 will be described. FIG. 5 is a block diagram showing an example of a functional configuration provided in the POS terminal 10.

The control unit 101 of the POS terminal 10 loads the control program 111 from the storage unit 102 into the RAM, and then operates in accordance with the control program 111 to thereby provided the functional units depicted in FIG. 5. Specifically, the control unit 101 provides an operation control unit 1001, a radio tag reader control unit 1002, a commodity registration unit 1003, a weight calculation unit 1004, a weight scale control unit 1005, an error determination unit 1006, a lighting control unit 1007, a display control unit 1008, a communication control unit 1009, and an checkout processing unit 1010.

As controlled by the operation control unit 1001, the operation unit 107 and the touch panel of the display unit 106 can receive various inputs from a user, for example, various input signals to start the reading of RF tags 50.

The RF tag reader control unit 1002 controls the RF tag reader 13 via the first connection interface 104. For example, the RF tag reader control unit 1002 controls the RF tag reader 13 to read commodity information from a RF tag 50 attached to a commodity 40 placed on the weight scale 12.

The commodity registration unit 1003 registers the read/identified commodities 40 to be sold. More specifically, the commodity registration unit 1003 registers any commodity 40 having a commodity code included in the commodity information as read by the RF tag reader control unit 1002 as a commodity 40 being sold in the sales transaction.

The weight calculation unit 1004 is an example of a calculation unit. The weight calculation unit 1004 calculates the total weight of the commodities 40 that were registered by the commodity registration unit 1003 according to the commodity information (e.g., commodity codes) read by the RF tag reader 13. More specifically, the weight calculation unit 1004 extracts the stored weight value from the commodity master data 112 for each commodity 40 identified by the commodity code by the radio tag reader control unit 1002. That is, the weight calculation unit 1004 extracts the weight value of each commodity 40 registered by the commodity registration unit 1003 from the commodity master data 112. The weight calculation unit 1004 then calculates a total weight value by adding all the stored weight values of the respective commodities 40 being registered in the sales transaction. When a weight value is included in the product information for an identified commodity 40, the weight calculation unit 1004 may calculate the total value by adding up the weight values included in the product information.

The weight scale control unit 1005 controls the weight scale 12 via the second connection interface 105. For example, the weight scale control unit 1005 obtains the measured weight of a commodity 40 placed on the weight scale 12. Here, when a shopping basket 30 is placed on the weight scale 12, the weight scale control unit 1005 can be configured to subtract (tare) the weight (expected, known, or average weight) of the shopping basket 30 from the total weight as measured by the weight scale 12, thereby isolating the weight of the commodities 40 in the shopping basket 30.

The error determination unit 1006 determines whether there is a difference between the total value calculated by the weight calculation unit 1004 and the weight value measured by the weight scale control unit 1005 that is equal to or larger than a threshold value. Here, the threshold value is, for example, 5 grams. However, in general, the threshold value may be arbitrarily selected.

The lighting control unit 1007 controls the checkout availability lamp 109. In this example, the lighting control unit 1007 controls the checkout availability lamp 109 to flash in blue when the difference between the total value calculated by the weight calculation unit 1004 and the weight value measured by the weight scale control unit 1005 is less than the threshold value. On the other hand, the lighting control unit 1007 controls the checkout availability lamp 109 to flash in red when the difference between the total value calculated by the weight calculation unit 1004 and the weight value measured by the weight scale control unit 1005 is equal to or larger than the threshold value.

The display control unit 1008 controls the display unit 106 to display information. More specifically, in this instance, if the difference between the total value calculated by the weight calculation unit 1004 and the weight value measured by the weight scale control unit 1005 is equal to or larger than a threshold value, the display control unit 1008 controls to the display unit 106 to show a notification screen or the like to indicate that the reading of the RF tags may have failed as indicated by a non-trivial difference between the expected and measured values. The notification screen provides a visual notification that reading of the RF tag 50 has failed. For example, the notification screen includes a message indicating that there may be a commodity 40 having a RF tag 50 that was not successfully read. When the reading of the RF tag 50 may have been inhibited by another commodity 40, simply shaking the shopping basket 30 to jostle the items therein may lead to a subsequent successful/complete reading of commodities 40. Therefore, the notification screen may display a message to encourage the user/customer to shake the shopping basket 30.

When a commodity 40 that has been is identified by commodity code read by the RF tag reader control unit 1002 is a commodity 40 that is to be excluded from the calculation of the total expected weight value, the display control unit 1008 causes this identified commodity 40 to be displayed (or a representation thereof) on the notification screen. The weight calculation unit 1004 typically extracts a weight value associated with each commodity code identified by the radio tag reader control unit 1002 from the commodity master data 112. However, when the extracted weight value of an item is 0 grams, the display control unit 1008 displays a notification screen indicating that the identified commodity 40 will be excluded from the calculations of the total expected weight value.

The display control unit 1008 causes a displaying of a message that the identified commodity 40 is being excluded from calculation of the expected total weight value. However, the method for determining whether or not the message is to be displayed is not limited to this method. For example, the commodity master data 112 may store target information to indicate whether or not the particular commodity 40 is to be treated as target for the weight calculation. In this case, the display control unit 1008 may determine whether or not the particular commodity 40 is to be requested to be separately weighed based on the target information extracted from the commodity master data 112. Alternatively, when the target information indicates the particular commodity 40 is not to be separately weighed, the display control unit 1008 may display a notification screen indicating that the particular commodity 40 should be excluded from the calculation of the weight, for example, removed from the shopping basket 30 and set aside.

When the commodity 40 identified by the commodity code read by the RF tag reader control unit 1002 is not to be separately weighed, the display control unit 1008 may cause the display of a notice that the particular commodity 40 may hinder the reading of the rf tag 50 when the extracted the inhibition flag for a particular identified commodity 40 identified by the commodity code included in the commodity information read by the rf tag reader control unit 1002 indicates potential inhibition. The inhibition flag indicates potential inhibit, the display control unit 1008 causes the display a notice indicating the possibility that the particular commodity 40 may hinder the reading of the Rf tag 50 on the notification screen. When the inhibition flag is included in the product information for a commodity 40, the display control unit 1008 may cause the display, on the notification screen, of a notice that the particular commodity 40 may hinder the reading of the RF tags 50.

The display control unit 120 may provide a notice that explicitly identifies the particular commodity 40 that has been indicated (by the extracted inhibition flag) as potentially hindering the reading of the RF tags 50, and display a representation of the commodity on the notification screen. As a result, the operator can address reading conditions (e.g., rearrange or reposition items) to improve potential reading of the commodities 40 in view of the identification of particular commodities 40 that may hinder reading of the RF tags 50. For example, the operator can change the position of the problematic commodity 40, or change the position of other commodities 40. Therefore, even if an error occurs due to the fact that an RF tag 50 cannot be read, the display control unit 1008 can provide notices to improve the chances for correctly reading the RF tags 50, thereby reducing reading errors.

The communication control unit 1009 controls the communication interface 103 to execute communication with the management device 20 connected via the network. For example, when the display control unit 1008 displays a notification screen, the communication control unit 1009 transmits error information to the management device 20 indicating that the difference between expected and measured weights is greater than or equal to the threshold value when a transmission condition is satisfied. The error information includes information for identifying the particular POS terminal 10 that output the error information. When the error information is received, the management device 20 indicates the particular POS terminal 10 at which the error has occurred. Therefore, since the administrator operating the management device 20 can recognize that there has been an error at the particular POS terminal 10, the administrator can go to the POS terminal 10 and appropriately deal with the error.

Here, when the display control unit 1008 causes the display of the notification screen, an error notice may be cleared by actions of the operator. In such a case, the administrator does not need to go to the POS terminal 10 to handle the error. Therefore, the communication control unit 1009 transmits error information only when a transmission condition is satisfied. The transmission condition is, for example, exceeding a preset time after a display of an error notice without the error being cleared by the operator or the underlying error which caused display of the error notice being of a particular type.

For example, if the display control unit 1008 causes the display of an error notice when the difference between the total expected weight value and the actually measured weight is equal to or greater than a threshold value, then the communication control unit 1009 can be configured to transmit error information only after the error notice has been continuously displayed for some length of time. That is, elapsed time from error notice generation/display is used as a transmission condition by the communication control unit 1009.

In another example, if the display control unit 1008 causes the display of an error notice when the difference between the total expected weight and the actually measured weight is equal to or greater than a threshold value, then communication control unit 1009 can be configured to transmit error information only if the user requests help via a preset input operation or the like. Possible transmission conditions are not limited to elapsed time and specific user requests. For example, the number of times in a sales transaction that the error determination unit 1006 has determined that there is a threshold-exceeding difference in the expected weight and the actual weight. Furthermore, the transmission conditions may be set arbitrarily.

The checkout processing unit 1010 executes checkout processing for the commodities 40 registered by the commodity registration processing when the difference between the total value calculated by the weight calculation unit 1004 and the weight measured by the weight scale control unit 1005 is less than the threshold value. For example, the checkout processing unit 1010 calculates the total amount due for the commodities 40 registered by the commodity registration processing. The checkout processing unit 1010 also calculates change due for money received from the customer. If the difference is equal to or greater than the threshold value, the checkout processing unit 1010 does not execute the checkout process until the discrepancy is resolved.

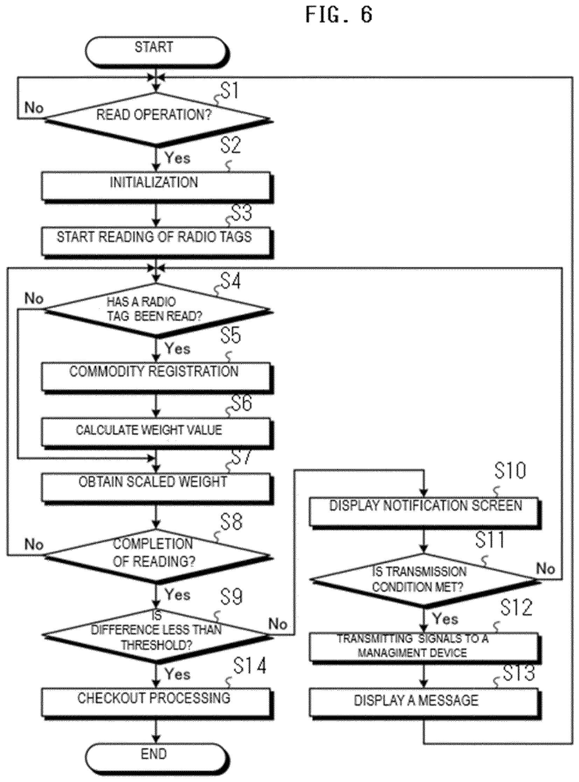

Next, a description will be given of a sales data registration process executed by the POS terminal 10. The sales data registration process includes a commodity registration process for registering a commodity 40 to be sold, and an checkout/settlement process for a commodity 40 registered in the commodity registration process. Here, FIG. 6 is a flowchart showing an example of a sales data registration process executed by the POS terminal 10.

The operation control unit 1001 determines whether or not an input for starting reading of the RF tag 50 has been received (step S1). When the input has not yet been received (No in step S1), the POS terminal 10 keeps waiting for the user input to indicate the start of the operation.

When the input has been received (Yes in step S1), the POS terminal 10 initializes various settings (step S2).

The RF tag reader control unit 1002 begins the reading of the RF tag 50 (step S3). That is, the RF tag reader control unit 1002 causes the RF tag reader 13 to emit radio frequency waves for reading the RF tag 50.

The RF tag reader control unit 1002 then determines whether or not a RF tag 50 has been read (step S4). That is, the RF tag reader control unit 1002 determines whether or not commodity information has been received from a RF tag 50. When the RF tag 50 has not yet been read (No in step S4), the registration processing flow advances to step S7.

When the RF tag 50 has been read (Yes in step S4), the commodity registration unit 1003 registers a commodity 40 corresponding to the commodity code included in the commodity information received from the RF tag 50 (step S5) .

The weight calculation unit 1004 calculates the total of the expected weight values for all the registered commodities 40 (step S6).

The weight scale control unit 1005 controls the weight scale 12 to measure the weight of the commodities 40 placed on the weight scale 12 (step S7).

The RF tag reader control unit 1002 determines whether reading of the RF tags 50 has been completed (step S8). When the reading of the RF tags 50 has not yet been completed (No in step S8), the registration processing returns to step S4 and continues the reading of the RF tags 50.

When the reading of the RF tags 50 has completed (Yes in step S8), the error determination unit 1006 determines whether or not the difference between the total weight of the commodities 40 from the weight calculation unit 1004 and the weight of the commodities 40 from the weight scale control unit 1005 is less than or equal to a threshold value (step S9).

When the difference is equal to or greater than a threshold value (No in step S9), the display control unit 1008 cause the display of a notification screen to indicate that the reading of the RF tags 50 has failed (step S10).

The communication control unit 1009 determines whether or not a predetermined transmission condition established for the transmitting of the error information to the management device 20 has been met (step S11). When the transmission condition has not been met (No in step S11), the registration processing flow goes to step S4.

When a transmission condition has been met (Yes in step S11), the communication control unit 1009 transmits error information to the management device 20 (step S12). Thus, the management device 20 displays an error notice indicating the occurrence of an error in the POS terminal 10. Thus, the POS terminal 10 provides a notification to an administrator that there is a problem at the POS terminal 10 that needs to be resolved.

The display control unit 1008 causes the display unit 106 to display a message that the administrator has been called (step S13). Then, the registration processing flow returns to step S1 and waits until the administrator can address the current situation.

When the difference in expected and measured weights is less than a threshold value (Yes in step S9), the checkout processing unit 1010 executes checkout processing for all the registered commodities 40 (step S14).

After the settlement processing for all the registered commodities 40, the POS terminal 10 ends the sales data registration process.

As described above, the POS terminal 10 according to the present embodiment displays an error notification on an notification screen when the difference between the expected weight calculated based on the commodity information read from the RF tag(s) 50 and the weight measured by the weight scale 12 is equal to or greater than a threshold value. Then, the POS terminal 10 transmits error information to the management device 20 if a predetermined transmission condition is also satisfied. When the error information is received by the management device 20, the management device 20 indicates that an abnormality has occurred in the processing at the POS terminal 10. Therefore, the administrator (e.g., a user of the management device 20) can go to the corresponding POS terminal 10 to address the situation. Therefore, the POS terminal 10 according to the present embodiment can provide assistance requests for the operator (e.g., store customer) of the POS terminal 10 when reading of the RF tags 50 appears to have failed.

In the present disclosure, a POS terminal 10 has a display control unit 1008 that operates to provide notice of an error by an error notification that is displayed on a notification screen. However, notification of an error by the POS terminal 10 is not limited to the display of an error notice on a notification screen, and a notification of an error may be provided in another format or manner. For example, an error notification may be provided by sounds, recorded voices or the like.

The programs executed in each of the different apparatuses of the above examples embodiments and modifications thereof can be incorporated in advance in a storage medium, such as a ROM or storage device, included within each apparatus, but the present disclosure is not limited thereto. For example, a program may be recorded on a non-transitory computer-readable recording medium such as a CD-ROM, a floppy disk , a CD-R, a DVD (Digital Versatile Disk), or the like, in an installable format or executable format. Further, in some examples, the described program(s) may be provided to an apparatus by downloading of the program(s) over network connection such as a LAN, the Internet, or the like.

Further, the program executed in each of the above example embodiments and any modified examples may be stored in a distributed manner on a computer connected to a network such as the Internet, or a cloud computing environment.

While certain embodiments have been described, these embodiments have been presented by way of example only, and are not intended to limit the scope of the present disclosure. Indeed, the novel embodiments described herein may be embodied in a variety of other forms; furthermore, various omissions, substitutions and changes in the form of the embodiments described herein may be made without departing from the scope of the present invention as defined by the appended claims. These embodiments and variations thereof are included in the scope of the present disclosure and are included within the scope of the present disclosure as represented in the appended claims and their equivalents.

## Claims

1. A point-of-sale apparatus, comprising:
a display screen for displaying information to a user;
a radio-frequency (RF) tag reader configured to read commodity codes from RF tags attached to commodities;
a weight scale to obtain a first weight of commodities on the weight scale;
a processor configured to:
receive commodity codes from the RF tag reader;
obtain commodity information corresponding to the commodity codes;
calculate a second weight based on the commodity information;
compare the first weight to the second weight; generate an error notification when a difference between the first and second weights meets or exceeds a predetermined threshold value;
display an error notice on the display screen if the error notification is generated; and
transmit a notification to an administrator terminal if the error notification has been generated and a predetermined transmission condition has been satisfied.

2. The point-of-sale apparatus according to claim 1, further comprising:
a communication interface, wherein the notification to the administrator terminal is transmitted by the communication interface.

3. The point-of-sale apparatus according to claim 1 or 2, wherein the weight scale is configured to apply a tare weight value in obtaining the first weight.

4. The point-of-sale apparatus according to any of claims 1 to 3, further comprising:
a storage unit storing commodity information in association with commodity codes, wherein the commodity information includes an expected weight value for each commodity code.

5. The point-of-sale apparatus according to any of claims 1 to 4, further comprising:
a storage unit storing commodity information in association with commodity codes, wherein the commodity information for each commodity code includes a flag value indicating whether the commodity corresponding to the commodity code hinders the reading of commodity codes from RF tags.

6. The point-of-sale apparatus according to any of claims 1 to 5, wherein the predetermined transmission condition is an elapse of time since the display of the error notice on the display screen exceeding a preset value.

7. The point-of-sale apparatus according to any of claims 1 to 6, wherein the predetermined transmission condition is the number of times during a single sales transaction that the error notification has been generated exceeding a preset value.

8. The point-of-sale apparatus according to any of claims 1 to 7, further comprising:
a user input device, wherein the predetermined transmission condition is receipt of a user input at the user input device requesting administrator assistance.

9. The point-of-sale apparatus according to any of claims 1 to 8, wherein the processor is configured to complete commodity registration processing for a sales transaction only when the difference between the first weight and the second weight is less than the predetermined threshold value.

10. A non-volatile computer readable storage medium including program instructions which when executed by a processor of a point-of-sale apparatus, the point-of-sale apparatus carries out a method of commodity registration, said method comprising:
receiving commodity codes from a RF tag reader;
obtaining commodity information corresponding to the commodity codes;
obtaining a first weight of commodities placed on a weight scale;
calculating a second weight based on the commodity information;
comparing the first weight to the second weight;
generating an error notification when a difference between the first and second weights meets or exceeds a predetermined threshold value;
displaying an error notice on a display screen of the point-of-sale apparatus if the error notification is generated; and
transmitting a notification to an administrator terminal if the error notification has been generated and a predetermined transmission condition has been satisfied.

11. A point-of-sale terminal controller, comprising:
a processor configured to:
receive commodity codes from an RF tag reader via a first interface connection;
obtain a first weight of commodities from a weight scale via second interface connection;
obtain commodity information corresponding to the commodity codes from a commodity data table;
calculate a second weight based on the commodity information;
compare the first weight to the second weight;
generate an error notification when a difference between the first and second weights meets or exceeds a predetermined threshold value;
display an error notice on a display screen of a point-of-sale terminal if the error notification is generated; and
transmit a notification to an administrator terminal via a communications interface if the error notification has been generated and a predetermined transmission condition has been satisfied.

12. The point-of-sale terminal controller according to claim 10, wherein the predetermined transmission condition is an elapse of time since the display of the error notice on the display screen exceeding a preset value.

13. The point-of-sale terminal controller according to any of claims 10 to 12, wherein the predetermined transmission condition is the number of times during a single sales transaction that the error notification has been generated exceeding a preset value.

14. The point-of-sale terminal controller according to any of claims 10 to 13, wherein the predetermined transmission condition is receipt of a user input at a user input device of the point-of-sale apparatus, the user input requesting administrator assistance.

15. The point-of-sale terminal controller according to any of claims 10 to 14, wherein the commodity information for each commodity code includes a flag value indicating whether the commodity corresponding to the commodity code hinders the reading of commodity codes from RF tags.
